# NEW EUROPEAN PATENT SPECIFICATION

(11) **EP 3 305 516 B2**
(45) Date of publication and mention of the opposition decision: **04.05.2022**
(45) Mention of the grant of the patent: 15.05.2019
(21) Application number: 17194592.6
(22) Date of filing: 03.10.2017
(51) Int. Cl.: B32B 5/02, B32B 5/12, B32B 5/26, B32B 7/12, B32B 27/12, B32B 27/32

(54) **USE OF A LIGHT MULTILAYER MATERIAL STRUCTURE TO MAKE BULKHEADS**
VERWENDUNG EINER LEICHTEN MEHRSICHTIGEN MATERIALSTRUKTUR ZUR HERSTELLUNG VON SCHOTTEN
UTILISATION D'UNE STRUCTURE MULTICOUCHE LÉGÉRE POUR RÉALISER DES CLOISONS

(30) Priority: 05.10.2016 IT 201600099626
(43) Date of publication of application: 11.04.2018
(73) Proprietor: GIEMME S.R.L., 41011 Campogalliano (MO) (IT)
(72) Inventor: CORRADINI, Marco, 41011 CAMPOGALLIANO MO (IT); YAZON, Vyacheslav, 41011 CAMPOGALLIANO MO (IT); GRIX, Mark Jonathan, BURNHAM ON CROUCH, Essex CM0 8HZ (GB); BIRRELL, Michael Ian, GUILDEN MORDEN, ROYSTON, Hertfordshire SG8 0PU (GB)
(74) Representative: Modiano, Micaela Nadia

(56) References cited:
- EP-A1- 0 671 259
- WO-A1-2013/064859
- WO-A1-2016/075010
- DE-U1-202017 004 083
- US-A- 5 529 826
- US-A1- 2004 234 744
- DATABASE WPI Week 199541 Thomson Scientific, London, GB; AN 1995-316701 XP002771306, & JP H07 214719 A (INOAC CORP KK) 15 August 1995 (1995-08-15)

## Description

### Description

The present invention relates to a structure made of multilayer material with increased lightness and a corresponding obtainable manufactured article.

The use is known of partition walls, known as "bulkheads", with a structural and safety function, for dividing the inner spaces of vehicles.

For example, in the sector of building motor vehicles for transporting goods and materials, such as ordinary vans, it is known to provide a bulkhead that separates the cargo compartment from the driver's cab and protects the driver and any passengers in the event of an accident or of a sudden braking, by preventing the loaded materials from invading the driver's cab.

Such bulkhead needs to have adequate characteristics of resistance to shocks in order to perform such task.

For this reason such bulkheads are generally made of sheet metal of suitable thickness and are made in the desired shape.

These conventional bulkheads are not devoid of drawbacks, among which is the fact that they are rather heavy, thus considerably increasing the overall weight of the vehicle on which they are mounted and the corresponding consumption of fuel.

Furthermore, the weight of such bulkheads complicates their logistical management and movement during the construction of the vehicles.

Last but not least, the necessity of mechanically deforming the sheet metal in order to obtain a bulkhead limits the variety of three-dimensional outlines that can be obtained and can require the execution of successive machining steps.

Also, if one needs to obtain a certain degree of acoustic insulation of one compartment with respect to the other, additional materials need to be provided and coupled to the sheet metal.

JPH07214719 provides a glass fiber layer between a plurality of intermediate layers each formed by impregnating a buffer material with a thermosetting curing agent. An upper surface layer composed of a fabric and a rear surface layer composed of a nonwoven fabric are respectively provided to the upper and rear surfaces of the intermediate layers through glass fiber layers and hot-melt films and the respective layers are bonded and configurationally fixed by the curing of the thermosetting curing agent and the fusion of the hot-melt films.

WO2013064859 discloses an article made of a multilayer composite material comprising a central element arranged between a first and a second reinforcement layer. The central element comprises: a first and a second structural layer each comprising at least one mat of needle punched fibres of the thermoplastic and/or natural type or else a mat of expanded thermoplastic polymer, while the structural layers are impregnated with a thermosetting resin; and a third reinforcement layer arranged between the two structural layers. The reinforcement layers consist of a fibrous material selected from the group consisting of glass fibres, natural fibres, carbon fibres, basalt fibres, kevlar fibres, aramid fibres or a mixture of such fibres.

US2004234744 discloses a laminate comprising a core having an inner layer of thermoplastic binder adjacent opposing sides thereof. A basalt structural reinforcement layer is provided adjacent each inner layer of thermoplastic binder. An outer layer of thermoplastic binder is applied adjacent each reinforcement layer. A scrim layer is applied adjacent one outer layer of thermoplastic binder and an adhesive layer and covering are provided adjacent the other outer layer of thermoplastic binder.
EP 0671259 A1 discloses a structure made of three layers. The middle layer, or "core layer" comprises natural fibers, possibly together with glass fibers, impregnated with a thermoplastic polymer matrix material, preferably PP. The external layers or "covering layers" are both identical and are made of glass fiber-reinforced PP. The layers are laminated together under heat and pressure.
DE 202017004083 U1 regards structures suitable as partition walls for vehicles and comprising one or more composite layers of glass-fiber reinforced polyamide that are covered, preferably on both surfaces of the layer, with a polyamide film.

The aim of the present invention is to eliminate the above mentioned drawbacks in the background art, by providing a structure made of multilayer material with increased lightness and a corresponding obtainable manufactured article that make it possible to obtain high levels of mechanical strength with a reduced specific weight.

Within this aim, an object of the present invention is to be workable by way of thermoplastic deformation techniques, so as to be versatile in use and permit the production of manufactured articles that have various different shape structures in a single processing step.

Another object of the present invention is to make it possible to produce bulkheads for vehicles of reduced weight, so as to simplify the mounting thereof and not penalize the overall weight and fuel consumption of such vehicles.

Another object of the present invention is to provide a simple structure which is easy and practical to implement, safe in use and effective in operation, and low cost.

In accordance with the invention, there is provided a use as defined in the appended claims.

Further characteristics and advantages of the present invention will become better apparent from the detailed description of a preferred, but not exclusive, embodiment, which is illustrated for the purposes of non-limiting example in the accompanying drawings wherein:

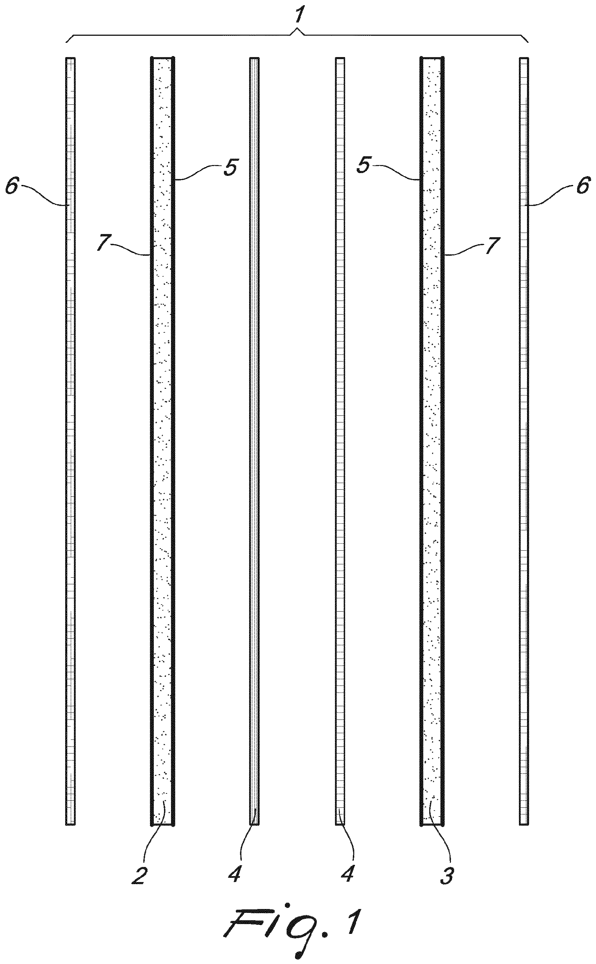

Figure 1 is a cross-sectional view of a structure made of multilayer material with increased lightness, for an embodiment according to the invention;
Figure 2 is a schematic perspective view of the structure made of multilayer material for an embodiment according to the invention;
Figure 3 is a perspective view of a use according to the invention of the type of a bulkhead for motor vehicles for transporting goods.

With reference to the figures, the reference numeral 1 generally designates a structure made of multilayer material with increased lightness.

The structure 1 is of the type comprising a plurality of layers of different materials superimposed in pairs which adhere to each other.

The structure 1 comprises a first layer and a second layer, respectively 2 and 3, made of composite material that comprises a thermoplastic polymeric matrix loaded with reinforcement fibers between which at least one layer of fabric 4 made of synthetic fibers is interposed.

The first and the second layer 2 and 3 give the material structure, acting as a "reinforcement" for the at least one layer of fabric 4, which confers resistance to stresses transverse to the arrangement of such layers.

It should be noted that the term "synthetic fibers" generically means artificial fibers made by way of adapted chemical processes or reactions, such as in particular synthetic fibers derived from synthetic polymers (for example aramid fibers) or inorganic fibers derived from minerals or inorganic substances (for example carbon fibers and glass fibers).

The thermoplastic polymeric matrix that constitutes the first and the second layer 2 and 3 comprises, preferably, polypropylene, compounds thereof or derivatives thereof.

The reinforcement fibers provided in the first and in the second layer 2 and 3 are, preferably, chosen from the group comprising aramid fibers, glass fibers and carbon fibers.

The first and the second layer 2 and 3 can have, as a function of the corresponding composition and thickness, a basis weight that can vary between 400g/m² and 2000g/m².

The layer of fabric 4 is preferably unidirectional, i.e. with fibers substantially arranged along a main direction. Therefore, in order to confer greater resistance to transverse stresses, two or more layers of fabric 4 that have their fibers oriented in different directions can be provided.

The figures show two layers of fabric 4 which have the respective fibers oriented in perpendicular directions.

Furthermore the layers of fabric 4 can be impregnated with a thermoplastic polymeric material that is chemically compatible with the thermoplastic polymeric matrix of the layers 2 and 3, so as to obtain a mutual cohesion of the layers if subjected to hot-pressing. The thermoplastic polymeric material with which the layers of fabric 4 are impregnated is, preferably, polypropylene, compounds thereof or derivatives thereof.

Between the first and the second layer 2 and 3 and the layers of fabric 4, a layer of thermoplastic adhesive 5 is preferably provided, polypropylene- or multilayer-based, continuous or with openings that further facilitate the cohesion of the layers.

Furthermore, the structure 1 can have at least one covering layer 6 coupled to at least one of the first and the second layer 2 and 3 by the interposition of a layer of thermoplastic adhesive 7, polypropylene- or multilayer-based, continuous or with openings that facilitate the cohesion of the layers.

The covering layer 6 can be constituted, for example, by fabric, film or scrim made of various different materials.

In the figures, each one of the layers 2 and 3 is coupled externally to a covering layer 6 by the interposition of a respective layer of adhesive 7.

The structure 1 made of composite material described above is particularly adapted to be worked by way of conventional techniques of thermoforming by molding, or any other technology that employs the action of pressure and heat in order to obtain the adhesion and the deformation of the layers so as to obtain a finished or semi-finished manufactured article.

For example, the method of working the structure 1 can entail an initial preheating of the first and of the second layer 2 and 3 with one or more layers of fabric 4 interposed, up to a temperature comprised between 150°C and 250°C, loading such juxtaposed layers into a thermoforming mold together with the pretensioned covering layers 6, closing the mold, and maintaining compression for a time that can vary from 30 seconds to 80 seconds as a function of the basis weight of the materials employed.

The manufactured article thus obtained can be either finished and ready for use, or semi-finished and be sent for further processing (for example cutting or blanking).

In particular, by way of thermoforming the structure 1 made of composite material described above, bulkheads and panels for various applications can be obtained.

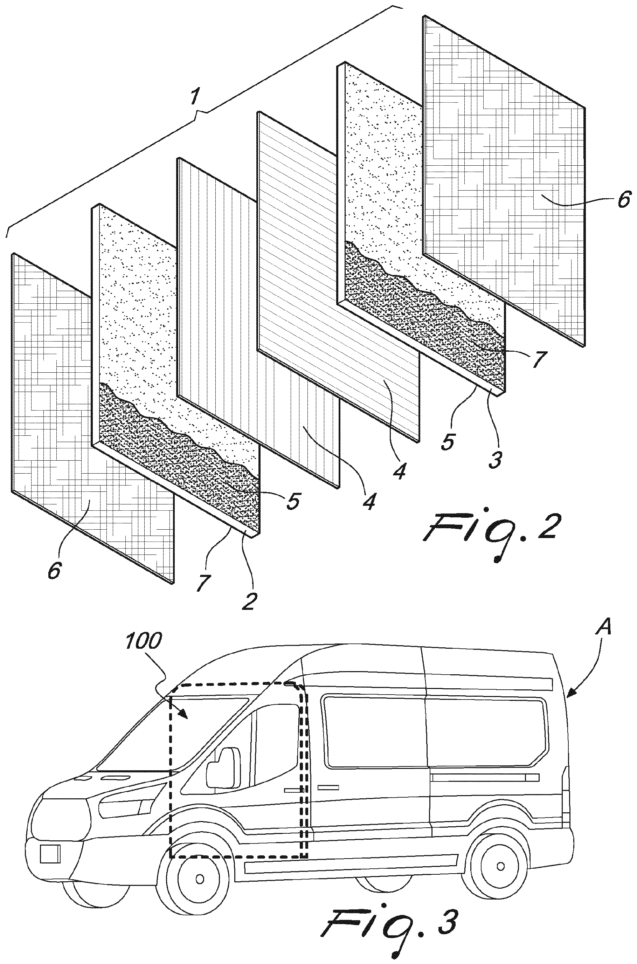

Advantageously, by way of thermoforming the structure 1 made of composite material described above, a bulkhead 100 can be obtained that is intended to be mounted on a motor vehicle A adapted to transport goods and materials, in order to separate the cargo compartment and the driver's cab (Figure 3).

In this case, the bulkhead 100 enables a considerable weight reduction compared to traditional metal bulkheads and it can be shaped at will with adapted thermoforming molds.

Furthermore the materials employed also confer excellent thermal and acoustic insulation characteristics on the bulkhead 100.

In practice it has been found that the invention as described achieves the intended aim and objects and, in particular, attention is drawn to the fact that the structure made of composite material according to the invention makes it possible to obtain manufactured articles that are light, easily managed in terms of logistics, and workable by way of conventional thermoforming techniques in order to obtain a wide variety of three-dimensional outlines.

The invention, thus conceived, is susceptible of numerous modifications and variations, all of which are within the scope of the appended claims.

Moreover, all the details may be substituted by other, technically equivalent elements.

In practice the materials employed, as well as the contingent dimensions and shapes, may be any according to requirements without for this reason departing from the scope of protection claimed herein.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Use of a structure (1) made of multilayer material with increased lightness for the provision by thermoforming of bulkheads (100) for separating the loading compartment and the driver's cab of motor vehicles (A) for the transport of goods and materials, of the type comprising a plurality of layers superimposed in pairs which adhere to each other, comprising a first layer and a second layer (2, 3) made of composite material that comprises a thermoplastic polymeric matrix loaded with reinforcement fibers, between which at least one layer of fabric made of synthetic fibers (4) is interposed, said thermoplastic polymeric matrix comprising polypropylene, compounds thereof or derivatives thereof, said at least one layer of fabric (4) being impregnated with a thermoplastic polymeric material that is chemically compatible with said thermoplastic polymeric matrix so as to obtain a cohesion of said first and second layers (2, 3) and of said at least one layer of fabric (4) as a result of hot-pressing.

2. Use of the structure (1) according to claim 1, **characterized in that** said reinforcement fibers are chosen from the group comprising glass fibers, carbon fibers, and aramid fibers.

3. Use of the structure (1) according to claim 1, **characterized in that** said synthetic fibers are chosen from the group comprising glass fibers, carbon fibers, and aramid fibers.

4. Use of the structure (1) according to claim 1, **characterized in that** said layer of fabric is unidirectional.

5. Use of the structure (1) according to claim 4, **characterized in that** it comprises a plurality of said layers of fabric (4) arranged with the corresponding synthetic fibers oriented in different directions.

6. Use of the structure (1) according to claim 5, **characterized in that** said thermoplastic polymeric material is polypropylene, compounds thereof or derivatives thereof.

7. Use of the structure (1), according to claim 1, **characterized in that** there is a respective layer of thermoplastic adhesive (5) between said first and second layers (2, 3) and said at least one layer of fabric (4).

8. Use of the structure (1) according to one or more of the preceding claims, **characterized in that** it comprises at least one covering layer (6) associated with at least one of said first and second layers (2, 3) by interposition of a respective thermoplastic adhesive layer (7).

## Patentansprüche

1. Verwendung einer Struktur (1) aus mehrschichtigem Material mit erhöhter Leichtigkeit zur Bereitstellung, durch Thermoformen, von Querwänden (100) zur Trennung des Laderaums vom Führerhaus von Kraftfahrzeugen (A) für den Transport von Gütern und Materialien, von der Art, die eine Vielzahl in Paaren übereinander gelegter Schichten umfasst, die aneinander haften, eine erste Schicht und eine zweite Schicht (2, 3) aus Verbundmaterial umfassend, das eine thermoplastische Polymermatrix umfasst, die mit Verstärkungsfasern verstärkt ist; zwischen denen mindestens eine Textilschicht aus Synthetikfasern (4) angeordnet ist; wobei die thermoplastische Polymermatrix Polypropylen, Verbindungen davon oder Derivate davon umfasst, wobei die mindestens eine Textilschicht (4) mit einem thermoplastischen Polymermaterial imprägniert ist, das chemisch mit der thermoplastischen Polymermatrix kompatibel ist, um eine Kohäsion der ersten und der zweiten Schicht (2, 3) und der mindestens einen Textilschicht (4) infolge von Heißpressen zu erreichen.

2. Verwendung der Struktur (1) gemäß Anspruch 1, **dadurch gekennzeichnet, dass** die Verstärkungsfasern gewählt sind aus der Gruppe, die Glasfasern, Carbonfasern und Aramidfasern umfasst.

3. Verwendung der Struktur (1) gemäß Anspruch 1, **dadurch gekennzeichnet, dass** die Synthetikfasern gewählt sind aus der Gruppe, die Glasfasern, Carbonfasern und Aramidfasern umfasst.

4. Verwendung der Struktur (1) gemäß Anspruch 1, **dadurch gekennzeichnet, dass** die Textilschicht unidirektional ist.

5. Verwendung der Struktur (1) gemäß Anspruch 4, **dadurch gekennzeichnet, dass** sie eine Vielzahl der Textilschichten (4) umfasst, angeordnet mit den entsprechenden Synthetikfasern ausgerichtet in verschiedene Richtungen.

6. Verwendung der Struktur (1) gemäß Anspruch 5, **dadurch gekennzeichnet, dass** das thermoplastische Polymermaterial Polypropylen, Verbindungen davon oder Derivate davon ist.

7. Verwendung der Struktur (1) gemäß Anspruch 1, **dadurch gekennzeichnet, dass** sich eine entsprechende Schicht von thermoplastischem Klebstoff (5) zwischen der ersten und der zweiten Schicht (2, 3) und der mindestens einen Textilschicht (4) befindet.

8. Verwendung der Struktur (1) gemäß einem oder mehreren der obigen Ansprüche, **dadurch gekennzeichnet, dass** sie mindestens eine Abdeckschicht (6) umfasst, verbunden mit der ersten und/oder der zweiten Schicht (2, 3) durch Anordnung einer entsprechenden Schicht (7) aus thermoplastischem Klebstoff dazwischen.

## Revendications

1. Utilisation d'une structure (1) constituée d'un matériau multicouche ayant une légèreté accrue pour la fourniture par thermoformage de cloisons (100) destinées à séparer le compartiment de chargement et la cabine de conduite de véhicules à moteur (A) pour le transport de marchandises et de matériaux, du type comportant une pluralité de couches superposées par paires qui adhèrent les unes aux autres, comportant une première couche et une seconde couche (2, 3) constituées d'un matériau composite qui comporte une matrice polymère thermoplastique chargée avec des fibres de renfort, entre lesquelles est intercalée au moins une couche de tissu en fibres synthétiques (4), ladite matrice polymère thermoplastique comportant du polypropylène, des composés de celui-ci ou des dérivés de celui-ci, ladite au moins une couche de tissu (4) étant imprégnée d'une matière polymère thermoplastique qui est chimiquement compatible avec ladite matrice polymère thermoplastique de manière à obtenir une cohésion desdites première et seconde couches (2, 3) et de ladite au moins une couche de tissu (4) en résultat d'un pressage à chaud.

2. Utilisation d'une structure (1) selon la revendication 1, **caractérisée en ce que** lesdites fibres de renfort sont choisies parmi le groupe comportant des fibres de verre, des fibres de carbone et des fibres d'aramide.

3. Utilisation d'une structure (1) selon la revendication 1, **caractérisée en ce que** lesdites fibres synthétiques sont choisies parmi le groupe comportant des fibres de verre, des fibres de carbone et des fibres d'aramide.

4. Utilisation d'une structure (1) selon la revendication 1, **caractérisée en ce que** ladite couche de tissu est unidirectionnelle.

5. Utilisation d'une structure (1) selon la revendication 4, **caractérisée en ce qu'**elle comporte une pluralité desdites couches de tissu (4) agencées avec les fibres synthétiques correspondantes orientées dans différentes directions.

6. Utilisation d'une structure (1) selon la revendication 5, **caractérisée en ce que** ladite matière polymère thermoplastique est du polypropylène, des composés de celui-ci ou des dérivés de celui-ci.

7. Utilisation d'une structure (1) selon la revendication 1, **caractérisée en ce qu'**il y a une couche respective d'adhésif thermoplastique (5) entre lesdites première et seconde couches (2, 3) et ladite au moins une couche de tissu (4).

8. Utilisation d'une structure (1) selon une ou plusieurs des revendications précédentes, **caractérisée en ce qu'**elle comporte au moins une couche de recouvrement (6) associée à au moins une desdites première et seconde couches (2, 3) par interposition d'une couche d'adhésif thermoplastique (7) respective.
